# EUROPEAN PATENT SPECIFICATION

(11) **EP 3 781 003 B1**
(45) Date of publication and mention of the grant of the patent: **12.11.2025**
(21) Application number: 20780081.4
(22) Date of filing: 08.07.2020
(51) Int. Cl.: A47J 31/02, A47J 31/06, A23F 5/00, A23F 5/24, A23F 5/26, A47J 31/08, A47J 31/36

(54) **COFFEE FILTER**
KAFFEEFILTER
FILTRE À CAFÉ

(30) Priority: 25.09.2019 US 201916582876
(43) Date of publication of application: 24.02.2021
(73) Proprietor: Pacific Market International, LLC, Seattle, Washington 98121 (US)
(72) Inventor: WAHL, Andrew C. F., Seattle, Washington 98126 (US)
(74) Representative: Forresters IP LLP
(86) International application number: PCT/US2020/041283
(87) International publication number: WO 2021/007372

(56) References cited:
- US-A- 4 446 158
- US-A- 5 249 509
- US-A- 5 775 206
- US-A- 5 775 206
- US-A- 5 826 493
- US-A1- 2007 186 779
- US-A1- 2010 112 164
- US-A1- 2010 263 548
- US-A1- 2012 067 221
- US-A1- 2018 064 283
- US-A1- 2019 191 914
- US-B1- 6 343 542

## Description

### BACKGROUND OF THE INVENTION

### Field of the Invention

The present invention is directed generally to filtering devices for making beverages and more particularly to coffee filters.

### Description of the Related Art

Many consumers enjoy drinking filtered beverages, such as coffee and tea. Therefore, needs exist for devices configured to filter such beverages.

US 5775206 A discloses a coffeemaker having a permanent filter.

US 6 343 542 B1 discloses a coffee-making container having a generally cylindrical shaped filter.

### BRIEF DESCRIPTION OF THE SEVERAL VIEWS OF THE DRAWING(S)

Figure 1 is a perspective view of a liquid being poured into a filter assembly that is resting on a container as viewed from above.
Figure 2 is a side perspective view of a vertical cross-section of the filter assembly of Figure 1 illustrated above the container of Figure 1.
Figure 3 is a partially exploded perspective view of the filter assembly of Figure 1.
Figure 4 is an exploded perspective view of a filter member of the filter assembly of Figure 1.
Figure 5 is a bottom perspective view of a receptacle of the filter assembly of Figure 1.
Figure 6 is a top view of the filter assembly of Figure 1 resting on the container of Figure 1.
Figure 7 is a side cross-sectional view of the filter assembly resting on the container taken through a line 7 - 7 of Figure 6, the filter assembly being illustrated holding particulates, allowing the liquid to combine with the particulates to form a composition, and allowing a liquid portion of the composition to flow through the filter member to produce a filtered liquid.

Like reference numerals have been used in the figures to identify like components.

### DETAILED DESCRIPTION OF THE INVENTION

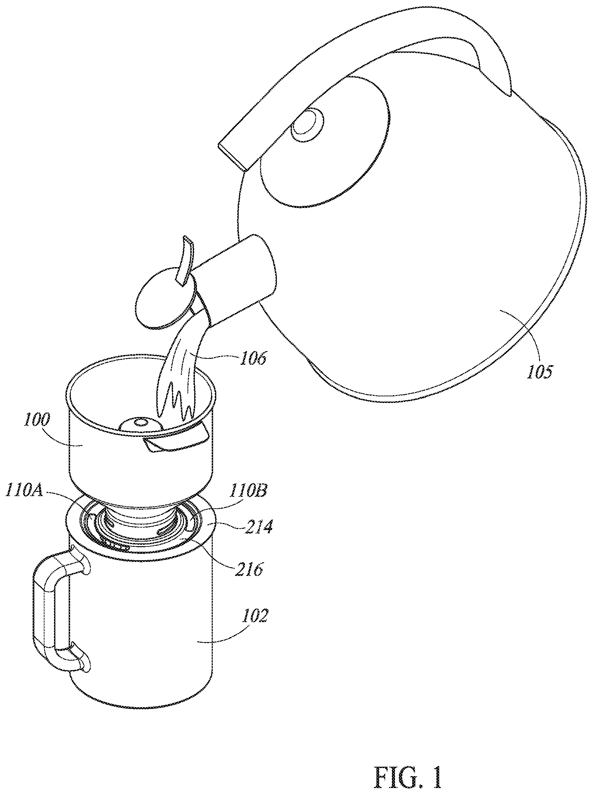

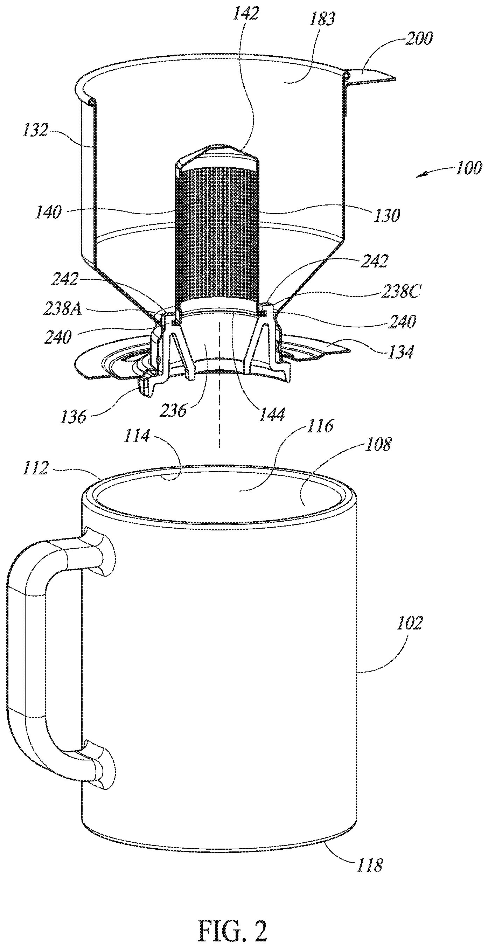

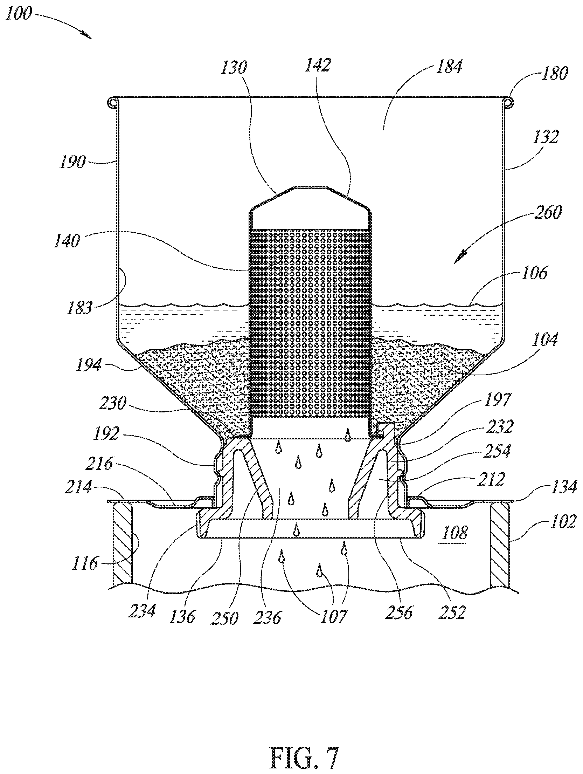

Figure 1 is a perspective view of a filter assembly 100 resting on a container 102 (e.g., a mug). The filter assembly 100 is configured to hold particles or particulates 104 (see Figure 7), such as coffee grounds, tea, and the like. A tea kettle 105 is illustrated pouring liquid 106 (e.g., heated water) into the filter assembly 100 whereat the liquid 106 encounters the particulates 104 (see Figure 7). Referring to Figure 7, the filter assembly 100 filters the particulates 104 from the liquid 106 to produce a filtered liquid 107, such as coffee, tea, and the like. The filtered liquid 107 then flows into an interior 108 of the container 102. Returning to Figure 1, the filter assembly 100 includes one or more apertures 110A and 110B through which a user may look to see a level of the filtered liquid 107 (see Figure 7) inside the interior 108 (see Figures 2 and 7) of the container 102. The filter assembly 100 may be used as a pour-over coffee maker. Alternatively, the filter assembly 100 may be used with or integrated into a machine that automatically makes coffee. By way of yet another non-limiting example, the filter assembly 100 may be implemented as a single service coffee filter.

Referring to Figure 2, the container 102 includes a rim 112 that defines an upper opening 114 into the interior 108. The container 102 has an inside surface 116 that surrounds and defines the interior 108. The rim 112 is opposite a closed bottom portion 118. While the container 102 has been illustrated as being a mug, the filter assembly 100 may be used with any container that includes an interior like the interior 108 and a rim like the rim 112. By way of non-limiting examples, the container 102 may be a bowl, a coffee pot, a carafe, a cup, a mug, a cooking pot, and the like.

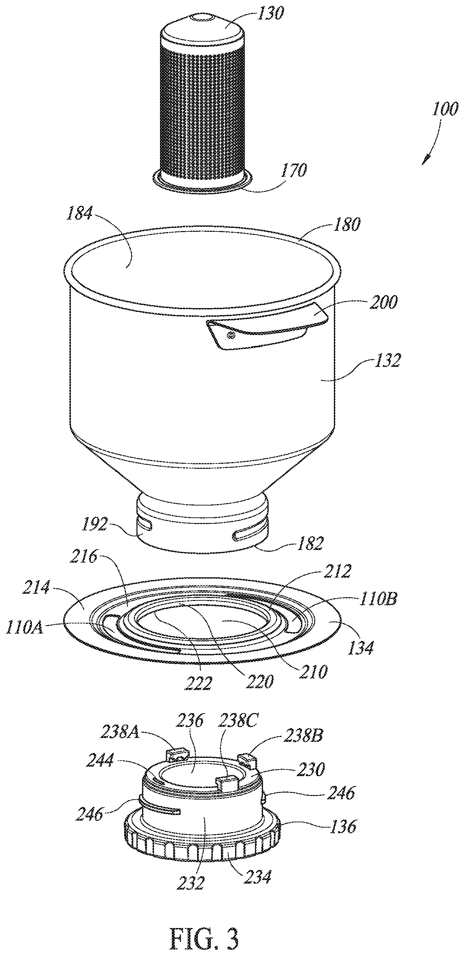

Figure 3 is a partially exploded perspective view of the filter assembly 100. As shown in Figure 3, the filter assembly 100 includes a filter member 130, a receptacle 132, a flange 134, and a filter holder member 136.

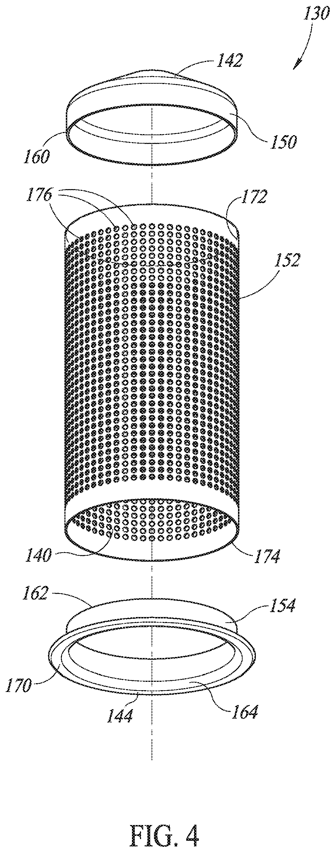

Referring to Figure 2, the filter member 130 has a hollow interior 140 and isgenerally cylindrically shaped. The filter member 130 has a closed upper end 142 opposite an open lower end 144. In the embodiment illustrated in Figure 4, the filter member 130 includes a top cap 150, a sidewall 152, and a lower anchor portion 154. The closed upper end 142 is formed in the top cap 150. The top cap 150 has an open lower portion 160.

The lower anchor portion 154 has an open upper portion 162. The open lower end 144 is formed in the lower anchor portion 154 and includes an outlet opening 164. The outlet opening 164 opens into the hollow interior 140 inside the filter member 130. The lower anchor portion 154 includes an outwardly extending flange 170 that extends circumferentially around the outlet opening 164 and extends outwardly away from the outlet opening 164. The flange 170 may be substantially perpendicular to the open upper portion 162.

The sidewall 152 is generally cylindrically shaped and may extend between the top cap 150 and the lower anchor portion 154. The hollow interior 140 is defined at least partially by the sidewall 152. In the embodiment illustrated, a majority portion of the hollow interior 140 is defined by the sidewall 152. The sidewall 152 has an upper opening 172 opposite a lower opening 174. The open lower portion 160 of the top cap 150 is configured to be received inside the upper opening 172 of the sidewall 152 and the open upper portion 162 of the lower anchor portion 154 is configured to be received inside the lower opening 174 of the sidewall 152.

The sidewall 152 includes perforations or through-holes 176 in fluid communication with the hollow interior 140. The through-holes 176 are configured to allow the liquid 106 (see Figures 1 and 7) to pass therethrough but to prevent those of the particulates 104 (see Figure 7) that are larger than a predetermined size from passing through the through-holes 176. By way of a non-limiting example, the predetermined size may be smaller than (e.g., 10% to 50% of) a grind size (e.g., 0.75 millimeters to 1 millimeter) of ground coffee of the type typically used to make coffee. Optionally, different filter members, each like the filter member 130 but having differently sized through-holes (like the through-holes 176) may be used with different particulates (e.g., ground coffee having different grind sizes). For example, a user may simply select the filter member having through-holes configured for use with particular particulates (e.g., ground coffee) the user wishes to use and install the selected filter member in the receptacle 132. The filter member 130 may be implemented as a screen filter. In such embodiments, the sidewall 152 may be constructed from a screen or screen-like structure. The filter member 130 may be constructed from metal, plastic, and the like.

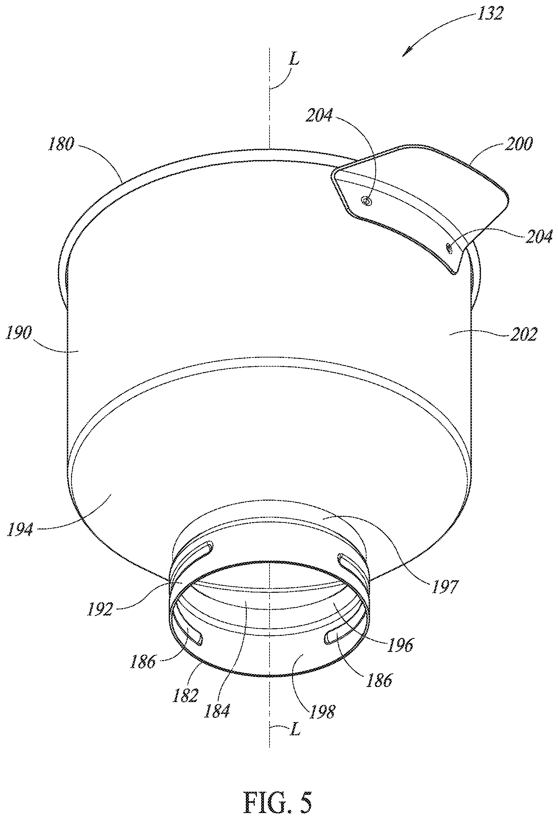

Referring to Figure 5, the receptacle 132 may be generally cone or funnel shaped but this is not a requirement. The receptacle 132 extends along a longitudinal axis "L" and has an open upper end 180 opposite an open lower end 182. The receptacle 132 has an inside surface 183 (see Figure 2) that defines an open ended through-channel 184 that extends along the longitudinal axis "L" from the open upper end 180 to the open lower end 182. Referring to Figure 2, the open lower end 182 (see Figures 3 and 5) is positionable within the upper opening 114 defined by the rim 112 of the container 102. Returning to Figure 5, the receptacle 132 has inside threads 186 positioned at or near the open lower end 182.

In the embodiment illustrated, the receptacle 132 has an upper cylindrically shaped portion 190 and a lower cylindrically shaped portion 192. The open upper end 180 is formed in the upper cylindrically shaped portion 190 and the open lower end 182 is formed in the lower cylindrically shaped portion 192. The upper and lower cylindrically shaped portions 190 and 192 are connected to one another by a tapered portion 194. The upper cylindrically shaped portion 190 has a larger inside diameter than the lower cylindrically shaped portion 192. In the embodiment illustrated, the lower cylindrically shaped portion 192 has a reduced diameter portion 196. The reduced diameter portion 196 may be formed by crimping a crimped portion 197 of the lower cylindrically shaped portion 192 inwardly until the crimped portion 197, extends into the through-channel 184 as the reduced diameter portion 196. The inside threads 186 are formed in the lower cylindrically shaped portion 192 below the reduced diameter portion 196. The lower cylindrically shaped portion 192 includes a lower portion 198 of the inside surface 183 (see Figure 2). The receptacle 132 may be constructed from metal, plastic, and the like.

The receptacle 132 may include a handle 200 that extends laterally and outwardly from an outside surface 202 of the receptacle 132. In the embodiment illustrated, the handle 200 is positioned near the open upper end 180 but this is not a requirement. The handle 200 may be affixed to the receptacle 132 by fasteners 204 (e.g., rivets, bolts, screws, and the like). The handle 200 may be constructed from metal, plastic, and the like.

Referring to Figure 3, the flange 134 is positioned near the open lower end 182 of the receptacle 132 and may be at least partially held in place by the filter holder member 136. In the embodiment illustrated, the flange 134 has a through-hole 210 configured to receive the lower cylindrically shaped portion 192 of the receptacle 132. The flange 134 may be generally round or disk-shaped and the through-hole 210 may be positioned in a central portion 212 of the flange 134.

Referring to Figure 7, the flange 134 has an outer portion 214 configured to rest upon the rim 112 (see Figure 2) of the container 102. In other words, the flange 134 is configured to support the filter assembly 100 on the container 102 and is configured to bear the weight of the filter assembly 100, the particulates 104, and the liquid 106. The outer portion 214 may be substantially planar.

The flange 134 has an offset portion 216 positioned between the outer portion 214 and the central portion 212. In the embodiment illustrated, the offset portion 216, the outer portion 214, and the central portion 212 are each generally ring-shaped and concentric with one another. Referring to Figure 1, the apertures 110A and 110B (e.g., slots) are formed in the offset portion 216 and provide visibility into the container 102 when the outer portion 214 is resting atop the rim 112 (see Figure 2) of the container 102 so the user can see into the container 102 and view the level of the filtered liquid 107 (see Figure 7) inside the interior 108 (see Figures 2 and 7) of the container 102. Referring to Figure 3, in the embodiment illustrated, the apertures 110A and 110B are curved along a circular path that is concentric with the offset portion 216, the outer portion 214, and the central portion 212. Referring to Figure 7, the offset portion 216 may be offset vertically with respect to the outer portion 214 such that the offset portion 216 extends downwardly further than the outer portion 214. Thus, if the filter assembly 100 slides along the rim 112 (see Figure 2) laterally with respect to the longitudinal axis "L" (see Figure 5), the offset portion 216 will contact the inside surface 116 of the container 102 near the rim 112 and limit the sliding of the filter assembly 100. In this manner, the offset portion 216 may help keep the flange 134 from sliding off the rim 112 (see Figure 2) when the filter assembly 100 is inadvertently bumped or pushed laterally with respect to the longitudinal axis "L" (see Figure 5).

The central portion 212 may be offset vertically with respect to the outer portion 214 such that the central portion 212 extends upwardly further than the outer portion 214. Referring to Figure 3, the central portion 212 terminates along the through-hole 210 and includes a sidewall portion 220 configured to fit snuggly along the lower cylindrically shaped portion 192. Friction between the sidewall portion 220 and the lower cylindrically shaped portion 192 helps prevent the flange 134 from sliding upwardly along the lower cylindrically shaped portion 192. Optionally, the sidewall portion 220 may be permanently affixed (e.g., welded) to the lower cylindrically shaped portion 192. The sidewall portion 220 has a lower free edge 222.

The filter holder member 136 has an upper portion 230, an intermediate portion 232, and a lower grip portion 234. An open ended through-channel 236 extends from the upper portion 230 to the lower grip portion 234 through the intermediate portion 232.

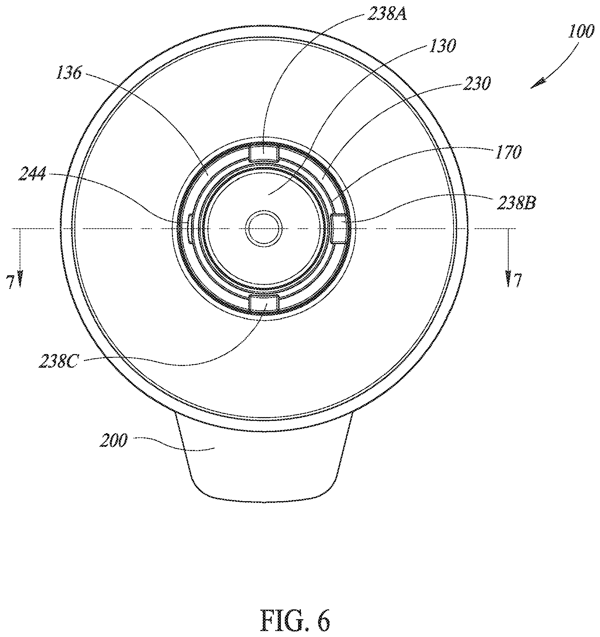

The upper portion 230 is configured to receive and support the filter member 130. The filter holder member 136 includes L-shaped bracket members or tabs 238A-238C that extend upwardly from the upper portion 230. Referring to Figure 2, each of the tabs 238A-238C has an upright support leg 240 and an upper leg 242 that is substantially orthogonal to the upright support leg 240. The upper leg 242 extends from the upright support leg 240 toward the through-channel 236. As shown in Figure 6, the tabs 238A-238C are configured to receive the flange 170 of the filter member 130 below the upper legs 242 (see Figure 2). In this manner, the tabs 238A-238C trap the flange 170 between the upper legs 242 (see Figure 2) and the upper portion 230, which prevents the filter member 130 from being lifted upwardly. Thus, the filter holder member 136 may be described as forming a bayonet style connection or bayonet mount with the filter member 130. The upper portion 230 may include a bump or stop 244 configured to help keep the flange 170 engaged with the tabs 238A-238C. In other words, the stop 244 helps prevent the filter member 130 from being slid laterally away from the tabs 238A-238C. Thus, to slide the flange 170 into engagement with the tabs 238A-238C, the flange 170 must be pushed laterally with sufficient force to push the flange 170 over the stop 244 and under the upper legs 242 (see Figure 2). Similarly, to slide the flange 170 out of engagement with the tabs 238A-238C, the flange 170 must be pulled laterally with sufficient force to pull the flange 170 over the stop 244 and out from under the upper legs 242 (see Figure 2). Referring to Figure 2, the tabs 238A-238C and the stop 244 (see Figures 3 and 6) position the filter member 130 such that any liquid flowing through the outlet opening 164 (see Figure 4) of the filter member 130 enters the through-channel 236 and is conducted thereby into the interior 108 (see Figures 2 and 7) of the container 102 (see Figures 1, 2, and 7). Thus, the through-channel 236 is in fluid communication with the outlet opening 164 (see Figure 4) and receives the filtered liquid 107 (see Figure 7) from the outlet opening 164. The through-channel 236 is also in fluid communication with the interior 108 (see Figures 2 and 7) of the container 102 (see Figures 1, 2, and 7) and provides the filtered liquid 107 to the interior 108 of the container 102.

Referring to Figure 3, the intermediate portion 232 includes outside threads 246 configured to mate with the inside threads 186 (see Figure 5) of the receptacle 132. Thus, the filter holder member 136 may be joined with the receptacle 132 and couple the filter member 130 inside the through-channel 184 of the receptacle 132. The filter member 130 extends upwardly from the upper portion 230 of the filter holder member 136 along the longitudinal axis "L" (see Figure 5).

The lower grip portion 234 is configured to be gripped by a user and used to turn the filter holder member 136 relative to the receptacle 132 in a first direction (e.g., clockwise) to selectively thread the inside and outside threads 186 (see Figure 5) and 246 together to thereby removably connect the filter holder member 136 to the receptacle 132. The lower grip portion 234 is also configured to be gripped by the user and used to turn the filter holder member 136 relative to the receptacle 132 in a second direction (e.g., counter-clockwise) to selectively unthread the outside threads 246 from the inside threads 186 (see Figure 5) to thereby separate the filter holder member 136 from the receptacle 132. The first and second directions are opposite one another. In the embodiment illustrated, the lower grip portion 234 extends radially outwardly beyond the intermediate portion 232. In such embodiments, the lower free edge 222 of the sidewall portion 220 of the flange 134 may be positioned near or rest upon the lower grip portion 234 when the filter holder member 136 is threaded into the receptacle 132. Referring to Figure 7, the through-channel 236 extends through the lower grip portion 234. The lower grip portion 234 may be at least partially positioned inside the interior 108 of the container 102.

When the filter holder member 136 is threaded into the receptacle 132, the upper portion 230 of the filter holder member 136 is positioned at or near the location where the tapered portion 194 is connected to the lower cylindrically shaped portion 192. Thus, the filter member 130 extends upwardly into the upper cylindrically shaped portion 190 from at or near the bottom of the tapered portion 194. This positions the filter member 130 above the rim 112 (see Figure 2) of the container 102. In the embodiment illustrated, the upper portion 230 is positioned alongside the crimped portion 197 and the reduced diameter portion 196 (see Figure 5).

The upper portion 230 is configured to prevent the particulates 104 (e.g., the coffee grounds, tea, and the like) from exiting the through-channel 184 through the open lower end 182 (see Figures 3 and 5) except through the filter member 130. In other words, the only paths out of the receptacle 132 for the particulates 104 (e.g., the coffee grounds) are through the open upper end 180 and through the filter member 130. But, as mentioned above, only those of the particulates 104 having sizes smaller than the predetermined size may pass through the filter member 130.

Additionally, the filter holder member 136 may form a liquid tight seal with the lower portion 198 (see Figure 5) of the inside surface 183. In such embodiments, the only path from the receptacle 132 to the interior 108 of the container 102 for the liquid 106 is through the through-holes 176 (see Figure 4) of the filter member 130. By way of a non-limiting example, the filter holder member 136 may form a liquid tight seal with the reduced diameter portion 196 (see Figure 5) of the receptacle 132. In the embodiment illustrated, the filter member 130 does not extend to the open upper end 180 and the closed upper end 142 is positioned inside the through-channel 184 below the open upper end 180.

The through-channel 236 may be defined by an internal tapered sidewall 250 that extends downwardly from the upper portion 230 through the intermediate portion 232, and terminates at or near the lower grip portion 234. In the embodiment illustrated, the lower grip portion 234 has a lower open end 252 in communication with an internal cavity 254 defined between the internal tapered sidewall 250 and an internal surface 256 of the intermediate portion 232. The filter holder member 136 may be constructed from metal, plastic, and the like.

Referring to Figure 7, to use the filter assembly 100, the particulates 104 (e.g., the coffee grounds) may be poured into the through-channel 184 through the open upper end 180 of the receptacle 132. The particulates 104 will rest or accumulate in a space or holding area defined above the upper portion 230 and between the filter member 130 and the inside surface 183 of the receptacle 132. Then, the liquid 106 is poured into the through-channel 184 through the open upper end 180 of the receptacle 132. The liquid 106 and the particulates 104 (e.g., the coffee grounds) combine in the holding area to form a composition 260. As explained above, the filter member 130 projects upward at the center of the receptacle 132 along the longitudinal axis "L" (see Figure 5). The filter member 130 filters the composition 260 to produce the filtered liquid 107 (e.g., coffee or tea). In other words, at least a liquid portion of the composition 260 travels through the through-holes 176 (see Figure 4) formed in the filter member 130 and enters the hollow interior 140 as the filtered liquid 107. The filtered liquid 107 includes a majority of the liquid 106 and those of the particulates 104 (e.g., the coffee grounds) that have a size that is smaller than the predetermined size. The filtered liquid 107 travels downward through the hollow interior 140, exits the outlet opening 164 (see Figure 4), and enters the through-channel 236. The filtered liquid 107 then travels downward through the through-channel 236, exits the lower open end 252 of the lower grip portion 234, and enters the interior 108 of the container 102.

To clean the filter assembly 100, it is turned upside down and the particulates 104 (e.g., the coffee grounds) are dumped out through the open upper end 180. Next, the filter assembly 100 is at least partially disassembled. Referring to Figure 3, this may begin by unthreading the filter holder member 136 from the receptacle 132. Then, referring to Figure 6, the filter member 130 may be removed from the filter holder member 136 by disengaging the flange 170 from the tabs 238A-238C, which disassembles the bayonet mount. Referring to Figure 7, the filter member 130 may be cleaned (e.g., rinsed) after it is removed from the filter holder member 136. Optionally, the flange 134 may be removed from the receptacle 132 and cleaned, if the flange 134 is not permanently attached to the receptacle 132. Further, the receptacle 132 and/or the filter holder member 136 may be cleaned, if desired. After the filter member 130 has been cleaned, the filter assembly 100 may be reassembly.

Referring to Figure 6, the filter assembly 100 may be reassembled by pushing the flange 170 into engagement with the tabs 238A-238C, which reassembles the bayonet mount and attaches the filter member 130 to the filter holder member 136. Then, referring to Figure 7, if the flange 134 was removed from the receptacle 132, the lower cylindrically shaped portion 192 is inserted into the through-hole 210 to thereby reconnect the flange 134 to the receptacle 132. Next, the outside threads 246 of the filter holder member 136 are threaded to the inside threads 186 (see Figure 5) of the receptacle 132 to position the filter member 130 to project upwardly at the center of the receptacle 132 along the longitudinal axis "L" (see Figure 5). At this point, the filter assembly 100 is ready for use.

## Claims

1. A filter assembly (100) for use with a container (102) having an interior (108), the filter assembly (100) comprising:
a receptacle (132) comprising an inside surface (183) defining an open-ended first through-channel (184);
a filter (130) positioned inside the first through-channel (184), the filter (130) being generally cylindrically shaped and having a hollow interior (140), the hollow interior (140) being at least partially defined by a sidewall (152) including perforations or through-holes (176) in fluid communication with the hollow interior (140), the filter comprising an outlet opening (164), the perforations or through-holes (176) of the filter being configured to filter particulates (104) each larger than a predetermined size from a liquid (106) to produce a filtered liquid (107) inside the hollow interior (140), the filtered liquid (107) exiting the filter (130) through the outlet opening (164); and
**characterized by**
a filter holder (136) configured to removably couple the filter (130) to the receptacle (132), a holding area configured to receive the liquid (106) being defined in the first through-channel (184) above the filter holder (136) and between the filter (130) and the inside surface (183) of the receptacle (132), the filter holder (136) comprising an open-ended second through-channel (236) in fluid communication with the outlet opening (164) and configured to receive the filtered liquid (107) from the outlet opening (164), the second through-channel (236) being configured to be in fluid communication with the interior (108) of the container (102) and to provide the filtered liquid (107) to the interior (108) of the container (102).

2. The filter assembly (100) of claim 1, wherein the particulates (104) that are each larger than the predetermined size are first particulates,
the filter (130) comprises a screen configured to prevent the first particulates from passing through the screen and to allow second particulates to pass through the screen, and
the second particulates are each smaller than the predetermined size.

3. The filter assembly (100) of claim 1, wherein the filter (130) comprises a flange (170),
the filter holder (136) comprises a plurality of L-shaped bracket members (238A-238C) configured to form a bayonet mount with the flange (170), and
the bayonet mount removably couples the filter holder (136) and the filter (130) together.

4. The filter assembly (100) of claim 3, wherein the receptacle (132) comprises inside threads (186),
the filter holder (136) comprises outside threads (246) configured to engage the inside threads (186), and
engagement between the inside and outside threads (186 and 246) couples the filter holder (136) to the receptacle (132).

5. The filter assembly (100) of claim 1, further comprising:
a flange (134) that extends outwardly from the receptacle (132) and is configured to rest on a rim (112) of the container (102).

6. The filter assembly (100) of claim 5, wherein the flange (134) comprises at least one aperture (110A and/or 110B) that provides visibility inside the interior (108) of the container (102) when the flange (134) is resting on the rim (112) of the container (102).

7. The filter assembly (100) of claim 5, wherein the first through-channel (184) extends along a longitudinal axis (L),
the flange (134) comprises an outer portion (214) configured to rest on the rim (112) of the container (102) and an offset portion (216) that extends downwardly below the outer portion (214), and
the offset portion (216) is configured to help prevent the filter assembly (100) from slipping off the rim (112) when the filter assembly (100) is bumped or pushed laterally with respect to the longitudinal axis (L).

8. The filter assembly (100) of claim 1, wherein the particulates (104) are coffee grounds.

9. The filter assembly (100) of claim 1, wherein the receptacle (132) comprises a handle (200) configured to be gripped by a user.

10. A pour-over coffee maker for use with water and coffee grounds, the pour-over coffee maker comprising:
a funnel-shaped receptacle (132) comprising an open upper end (180) opposite an open lower end (182), the open upper end (180) being configured to receive the water and the coffee grounds into the funnel-shaped receptacle (132);
a filter holder (136) removably coupled to the open lower end (182) of the funnel-shaped receptacle (132); and
a filter (130) removably coupled to the filter holder (136) and positioned by the filter holder (136) between the open upper end (180) and the open lower end (182) inside the funnel-shaped receptacle (132), the filter (130) being generally cylindrically shaped and having a hollow interior (140), the hollow interior (140) being at least partially defined by a sidewall (152) including perforations or through-holes (176) in fluid communication with the hollow interior (140), the water and the coffee grounds combining to form coffee inside the funnel-shaped receptacle (132) when the funnel-shaped receptacle (132) contains the water and the coffee grounds, the sidewall (152) of the filter (130) being configured to filter the coffee grounds from the coffee as the coffee travels through the perforations or through-holes (176) and into the hollow interior (140) of the filter (130).

11. The pour-over coffee maker of claim 10, wherein the filter (130) is removably coupled to the filter holder (136) by a bayonet mount.

12. The pour-over coffee maker of claim 10, wherein the funnel-shaped receptacle (132) comprises first threads (186),
the filter holder (136) comprises second threads (246), and
the filter holder (136) is removably coupled to the open lower end (182) of the funnel-shaped receptacle (132) by the first and second threads (186 and 246).

13. The pour-over coffee maker of claim 10, further comprising:
a flange (134) that extends outwardly from the funnel-shaped receptacle (132) and is configured to rest on a rim (112) of a container (102).

14. The pour-over coffee maker of claim 13, wherein the flange (134) comprises at least one aperture (110A and/or 110B) that provides visibility inside an interior (108) of the container (102) when the flange (134) is resting on the rim (112) of the container (102).

15. The pour-over coffee maker of claim 13, wherein the funnel-shaped receptacle (132) extends along a longitudinal axis (L),
the flange (134) comprises an outer portion (214) configured to rest on the rim (112) of the container (102) and an offset portion (216) that extends downwardly below the outer portion (214), and
the offset portion (216) is configured to help prevent the pour-over coffee maker from slipping off the rim (112) when the pour-over coffee maker is bumped or pushed laterally with respect to the longitudinal axis (L).

## Patentansprüche

1. Filteranordnung (100) zur Verwendung mit einem Behälter (102), der einen Innenraum (108) aufweist, wobei die Filteranordnung (100) umfasst:
eine Aufnahme (132), die eine Innenfläche (183) umfasst, die einen ersten Durchgangskanal (184) mit offenem Ende definiert;
einen Filter (130), der in dem ersten Durchgangskanal (184) angeordnet ist, wobei der Filter (130) im Allgemeinen zylindrisch geformt ist und einen hohlen Innenraum (140) aufweist, wobei der hohle Innenraum (140) mindestens teilweise durch eine Seitenwand (152) definiert ist, die Perforationen oder Durchgangslöcher (176) einschließt, die mit dem hohlen Innenraum (140) in Fluidverbindung stehen, wobei der Filter eine Auslassöffnung (164) umfasst, wobei die Perforationen oder Durchgangslöcher (176) des Filters konfiguriert sind, um Partikel (104), die jeweils größer als eine vorbestimmte Größe sind, aus einer Flüssigkeit (106) zu filtern, um in dem hohlen Innenraum (140) eine gefilterte Flüssigkeit (107) zu erzeugen, wobei die gefilterte Flüssigkeit (107) den Filter (130) durch die Auslassöffnung (164) verlässt; und
**durch Folgendes gekennzeichnet:**
einen Filterhalter (136), der konfiguriert ist, um den Filter (130) abnehmbar mit der Aufnahme (132) zu koppeln, wobei ein Haltebereich, der konfiguriert ist, um die Flüssigkeit (106) aufzunehmen, in dem ersten Durchgangskanal (184) über dem Filterhalter (136) und zwischen dem Filter (130) und der Innenfläche (183) der Aufnahme (132) definiert ist, wobei der Filterhalter (136) einen zweiten Durchgangskanal (236) mit offenem Ende umfasst, der in Fluidverbindung mit der Auslassöffnung (164) steht und konfiguriert ist, um die gefilterte Flüssigkeit (107) von der Auslassöffnung (164) aufzunehmen, wobei der zweite Durchgangskanal (236) konfiguriert ist, um in Fluidverbindung mit dem Inneren (108) des Behälters (102) zu stehen und die gefilterte Flüssigkeit (107) dem Inneren (108) des Behälters (102) zuzuführen.

2. Filteranordnung (100) nach Anspruch 1, wobei die Partikel (104), die jeweils größer als die vorgegebene Größe sind, erste Partikel sind,
der Filter (130) ein Sieb umfasst, das konfiguriert ist, um den Durchgang der ersten Partikel durch das Sieb zu verhindern und den Durchgang der zweiten Partikel durch das Sieb zu ermöglichen, und
die zweiten Partikel jeweils kleiner als die vorgegebene Größe sind.

3. Filteranordnung (100) nach Anspruch 1, wobei der Filter (130) einen Flansch (170) umfasst,
der Filterhalter (136) eine Vielzahl von L-förmigen Halterungselementen (238A-238C) umfasst, die konfiguriert sind, um mit dem Flansch (170) eine Bajonetthalterung zu bilden, und
die Bajonetthalterung den Filterhalter (136) und den Filter (130) abnehmbar miteinander koppelt.

4. Filteranordnung (100) nach Anspruch 3, wobei die Aufnahme (132) Innengewinde (186) umfasst,
der Filterhalter (136) Außengewinde (246) umfasst, die zum Eingriff mit den Innengewinden (186) konfiguriert sind, und
durch den Eingriff zwischen den Innen- und Außengewinden (186 und 246) der Filterhalter (136) mit der Aufnahme (132) gekoppelt wird.

5. Filteranordnung (100) nach Anspruch 1, die ferner umfasst:
einen Flansch (134), der sich von der Aufnahme (132) nach außen erstreckt und konfiguriert ist, um auf einem Rand (112) des Behälters (102) aufzuliegen.

6. Filteranordnung (100) nach Anspruch 5, wobei der Flansch (134) mindestens eine Öffnung (110A und/oder 110B) umfasst, die einen Einblick in das Innere (108) des Behälters (102) ermöglicht, wenn der Flansch (134) auf dem Rand (112) des Behälters (102) aufliegt.

7. Filteranordnung (100) nach Anspruch 5, wobei sich der erste Durchgangskanal (184) entlang einer Längsachse (L) erstreckt,
der Flansch (134) einen äußeren Abschnitt (214), der konfiguriert ist, um auf dem Rand (112) des Behälters (102) aufzuliegen, und einen versetzten Abschnitt (216) umfasst, der sich nach unten unter den äußeren Abschnitt (214) erstreckt, und
der versetzte Abschnitt (216) konfiguriert ist, um dazu beizutragen, ein Abrutschen der Filteranordnung (100) vom Rand (112) zu verhindern, wenn die Filteranordnung (100) seitlich in Bezug auf die Längsachse (L) gestoßen oder geschoben wird.

8. Filteranordnung (100) nach Anspruch 1, wobei es sich bei den Partikeln (104) um Kaffeesatz handelt.

9. Filteranordnung (100) nach Anspruch 1, wobei die Aufnahme (132) einen Griff (200) umfasst, der konfiguriert ist, um von einem Benutzer gegriffen werden zu können.

10. Übergießkaffeemaschine zur Verwendung mit Wasser und Kaffeesatz, wobei die Übergießkaffeemaschine umfasst:
eine trichterförmige Aufnahme (132), die ein offenes oberes Ende (180) gegenüber einem offenen unteren Ende (182) umfasst, wobei das offene obere Ende (180) konfiguriert ist, um das Wasser und den Kaffeesatz in die trichterförmigen Aufnahme (132) aufzunehmen;
einen Filterhalter (136), der abnehmbar mit dem offenen unteren Ende (182) der trichterförmigen Aufnahme (132) gekoppelt ist; und
einen Filter (130), der abnehmbar mit dem Filterhalter (136) gekoppelt ist und durch den Filterhalter (136) zwischen dem offenen oberen Ende (180) und dem offenen unteren Ende (182) innerhalb der trichterförmigen Aufnahme (132) positioniert ist, wobei der Filter (130) im Allgemeinen zylindrisch geformt ist und einen hohlen Innenraum (140) aufweist, wobei der hohle Innenraum (140) mindestens teilweise durch eine Seitenwand (152) begrenzt ist, die Perforationen oder Durchgangslöcher (176) einschließt, die mit dem hohlen Innenraum (140) in Fluidverbindung stehen, wobei sich das Wasser und der Kaffeesatz in der trichterförmigen Aufnahme (132) zu Kaffee vereinigen, wenn die trichterförmige Aufnahme (132) das Wasser und den Kaffeesatz einschließt, wobei die Seitenwand (152) des Filters (130) konfiguriert ist, um den Kaffeesatz aus dem Kaffee zu filtern, wenn der Kaffee durch die Perforationen oder Durchgangslöcher (176) in den hohlen Innenraum (140) des Filters (130) gelangt.

11. Übergießkaffeemaschine nach Anspruch 10, wobei der Filter (130) durch eine Bajonetthalterung abnehmbar mit dem Filterhalter (136) gekoppelt ist.

12. Übergießkaffeemaschine nach Anspruch 10, wobei die trichterförmige Aufnahme (132) erste Gewinde (186) umfasst,
der Filterhalter (136) zweite Gewinde (246) umfasst, und
der Filterhalter (136) durch die ersten und zweiten Gewinde (186 und 246) mit dem offenen unteren Ende (182) der trichterförmigen Aufnahme (132) abnehmbar gekoppelt ist.

13. Übergießkaffeemaschine nach Anspruch 10, die ferner umfasst:
einen Flansch (134), der sich von der trichterförmigen Aufnahme (132) nach außen erstreckt und konfiguriert ist, um auf einem Rand (112) eines Behälters (102) aufzuliegen.

14. Übergießkaffeemaschine nach Anspruch 13, wobei der Flansch (134) mindestens eine Öffnung (110A und/oder 110B) umfasst, die einen Einblick in das Innere (108) des Behälters (102) ermöglicht, wenn der Flansch (134) auf dem Rand (112) des Behälters (102) aufliegt.

15. Übergießkaffeemaschine nach Anspruch 13, wobei sich die trichterförmige Aufnahme (132) entlang einer Längsachse (L) erstreckt,
der Flansch (134) einen äußeren Abschnitt (214), der konfiguriert ist, um auf dem Rand (112) des Behälters (102) aufzuliegen, und einen versetzten Abschnitt (216) umfasst, der sich nach unten unter den äußeren Abschnitt (214) erstreckt, und
der versetzte Abschnitt (216) konfiguriert ist, um dazu beizutragen, ein Abrutschen der Übergießkaffeemaschine vom Rand (112) zu verhindern, wenn die Übergießkaffeemaschine seitlich in Bezug auf die Längsachse (L) gestoßen oder geschoben wird.

## Revendications

1. Ensemble filtre (100) pour utilisation avec un récipient (102) ayant un intérieur (108), l'ensemble filtre (100) comprenant :
un réceptacle (132) comprenant une surface intérieure (183) définissant premier canal traversant (184) à extrémités ouvertes ;
un filtre (130) positionné à l'intérieur du premier canal traversant (184), le filtre (130) étant de forme généralement cylindrique et ayant un intérieur creux (140), l'intérieur creux (140) étant défini au moins partiellement par une paroi latérale (152) comportant des perforations ou trous traversants (176) en communication fluidique avec l'intérieur creux (140), le filtre comprenant une ouverture de sortie (164), les perforations ou trous traversants (176) du filtre étant conçus pour filtrer des matières particulaires (104) plus grandes chacune qu'une taille prédéterminée par rapport à un liquide (106) pour produire un liquide filtré (107) à l'intérieur de l'intérieur creux (140), le liquide filtré (107) quittant le filtre (130) à travers l'ouverture de sortie (164) ; et
**caractérisé par**
un porte-filtre (136) conçu pour accoupler de manière amovible le filtre (130) au réceptacle (132), une zone de retenue conçue pour recevoir le liquide (106) étant définie dans le premier canal traversant (184) au-dessus du porte-filtre (136) et entre le filtre (130) et la surface intérieure (183) du réceptacle (132), le porte-filtre (136) comprenant un second canal traversant (236) à extrémités ouvertes en communication fluidique avec l'ouverture de sortie (164) et conçu pour recevoir le liquide filtré (107) en provenance de l'ouverture de sortie (164), le second canal traversant (236) étant conçu pour être en communication fluidique avec l'intérieur (108) du récipient (102) et pour fournir le liquide filtré (107) à l'intérieur (108) du récipient (102).

2. Ensemble filtre (100) selon la revendication 1, dans lequel les matières particulaires (104) qui sont chacune plus grandes que la taille prédéterminée sont des premières matières particulaires,
le filtre (130) comprend un tamis conçu pour empêcher les premières matières particulaires de passer à travers le tamis et pour permettre à des secondes matières particulaires de passer à travers le tamis, et
les secondes matières particulaires sont chacune plus petites que la taille prédéterminée.

3. Ensemble filtre (100) selon la revendication 1, dans lequel le filtre (130) comprend une collerette (170),
le porte-filtre (136) comprend une pluralité d'éléments de fixation en forme de L (238A-238C) conçus pour former une monture à baïonnette avec la collerette (170), et
la monture à baïonnette accouple de manière amovible le porte-filtre (136) et le filtre (130) ensemble.

4. Ensemble filtre (100) selon la revendication 3, dans lequel le réceptacle (132) comprend des filetages intérieurs (186),
le porte-filtre (136) comprend des filetages extérieurs (246) conçus pour venir en prise avec les filetages intérieurs (186), et
une mise en prise entre les filetages intérieurs et extérieurs (186 et 246) accouple le porte-filtre (136) au réceptacle (132).

5. Ensemble filtre (100) selon la revendication 1, comprenant en outre :
une collerette (134) qui s'étend vers l'extérieur à partir du réceptacle (132) et est conçue pour reposer sur un rebord (112) du récipient (102).

6. Ensemble filtre (100) selon la revendication 5, dans lequel la collerette (134) comprend au moins une ouverture (110A et/ou 110B) qui fournit une visibilité à l'intérieur (108) du récipient (102) lorsque la collerette (134) repose sur le rebord (112) du récipient (102).

7. Ensemble filtre (100) selon la revendication 5, dans lequel le premier canal traversant (184) s'étend le long d'un axe longitudinal (L),
la collerette (134) comprend une partie externe (214) conçue pour reposer sur le rebord (112) du récipient (102) et une partie décalée (216) qui s'étend vers le bas en dessous de la partie externe (214), et
la partie décalée (216) est conçue pour aider à empêcher l'ensemble filtre (100) de glisser du rebord (112) lorsque l'ensemble filtre (100) est heurté ou poussé latéralement par rapport à l'axe longitudinal (L).

8. Ensemble filtre (100) selon la revendication 1, dans lequel les matières particulaires (104) sont du café moulu.

9. Ensemble filtre (100) selon la revendication 1, dans lequel le réceptacle (132) comprend une poignée (200) conçue pour être saisie par un utilisateur.

10. Cafetière à versement pour utilisation avec de l'eau et du café moulu, la cafetière à versement comprenant :
un réceptacle en forme d'entonnoir (132) comprenant une extrémité supérieure ouverte (180) opposée à une extrémité inférieure ouverte (182), l'extrémité supérieure ouverte (180) étant conçue pour recevoir l'eau et le café moulu dans le réceptacle en forme d'entonnoir (132) ;
un porte-filtre (136) accouplé de manière amovible à l'extrémité inférieure ouverte (182) du réceptacle en forme d'entonnoir (132) ; et
un filtre (130) accouplé de manière amovible au porte-filtre (136) et positionné par le porte-filtre (136) entre l'extrémité supérieure ouverte (180) et l'extrémité inférieure ouverte (182) à l'intérieur du réceptacle en forme d'entonnoir (132), le filtre (130) étant de forme généralement cylindrique et ayant un intérieur creux (140), l'intérieur creux (140) étant défini au moins partiellement par une paroi latérale (152) comportant des perforations ou trous traversants (176) en communication fluidique avec l'intérieur creux (140), l'eau et le café moulu se combinant pour former du café à l'intérieur du réceptacle en forme d'entonnoir (132) lorsque le réceptacle en forme d'entonnoir (132) contient l'eau et le café moulu, la paroi latérale (152) du filtre (130) étant conçue pour filtrer le café moulu par rapport au café à mesure que café traverse les perforations ou trous traversants (176) et arrive dans l'intérieur creux (140) du filtre (130).

11. Cafetière à versement selon la revendication 10, dans laquelle le filtre (130) est accouplé de manière amovible au porte-filtre (136) par une monture à baïonnette.

12. Cafetière à versement selon la revendication 10, dans laquelle le réceptacle en forme d'entonnoir (132) comprend des premiers filetages (186),
le porte-filtre (136) comprend des seconds filetages (246), et
le porte-filtre (136) est accouplé de manière amovible à l'extrémité inférieure ouverte (182) du réceptacle en forme d'entonnoir (132) par les premiers et seconds filetages (186 et 246).

13. Cafetière à versement selon la revendication 10, comprenant en outre :
une collerette (134) qui s'étend vers l'extérieur à partir du réceptacle en forme d'entonnoir (132) et est conçue pour reposer sur un rebord (112) d'un récipient (102).

14. Cafetière à versement selon la revendication 13, dans laquelle la collerette (134) comprend au moins une ouverture (110A et/ou 110B) qui fournit une visibilité à l'intérieur (108) du récipient (102) lorsque la collerette (134) repose sur le rebord (112) du récipient (102).

15. Cafetière à versement selon la revendication 13, dans laquelle le réceptacle en forme d'entonnoir (132) s'étend le long d'un axe longitudinal (L),
la collerette (134) comprend une partie externe (214) conçue pour reposer sur le rebord (112) du récipient (102) et une partie décalée (216) qui s'étend vers le bas en dessous de la partie externe (214), et
la partie décalée (216) est conçue pour aider à empêcher la cafetière à versement de glisser du rebord (112) lorsque la cafetière à versement est heurtée ou poussée latéralement par rapport à l'axe longitudinal (L).
